Europäisches Patentamt

European Patent Office

Office européen des brevets

(19)

(11) Veröffentlichungsnummer : **0 348 768 B1**

(12)

# EUROPÄISCHE PATENTSCHRIFT

(45) Veröffentlichungstag der Patentschrift :
**30.09.92 Patentblatt 92/40**

(51) Int. Cl.⁵ : **B01D 53/36, B01J 27/053, B01J 23/24**

(21) Anmeldenummer : **89111041.3**

(22) Anmeldetag : **19.06.89**

(54) **Verfahren zur Entfernung von Stickoxiden aus Verbrennungsabgasen.**

(30) Priorität : **25.06.88 DE 3821480**

(43) Veröffentlichungstag der Anmeldung :
**03.01.90 Patentblatt 90/01**

(45) Bekanntmachung des Hinweises auf die
Patenterteilung :
**30.09.92 Patentblatt 92/40**

(84) Benannte Vertragsstaaten :
**AT BE DE GB IT NL SE**

(56) Entgegenhaltungen :
**EP-A- 0 271 919**
**PATENT ABSTRACTS OF JAPAN, Band 2, Nr.**
**152, 20. Dezember 1978, Seite 3598 C 78; &**
**JP-A-53 117 689 (MITSUBISHI JUKOGOK.K.)**
**14-10-1978**

(73) Patentinhaber : **BASF Aktiengesellschaft**
**Carl-Bosch-Strasse 38**
**W-6700 Ludwigshafen (DE)**

(72) Erfinder : **Scheidsteger, Olaf, Dr.**
**Rheindammstrasse 30**
**W-6800 Mannheim 1 (DE)**
Erfinder : **Hoelderich, Wolfgang, Dr.**
**Mannheimer Strasse 18 c**
**W-6710 Frankenthal (DE)**
Erfinder : **Drews, Ronald, Dr.**
**Pranckhstrasse 22**
**W-6700 Ludwigshafen (DE)**
Erfinder : **Schachner, Helmut, Dr.**
**Zum Gruenshof 6**
**W-6909 Walldorf (DE)**
Erfinder : **Hess, Klaus, Dr.**
**Sonnenwendstrasse 40**
**W-6702 Bad Duerkheim (DE)**

## Beschreibung

Vorliegende Erfindung betrifft ein Verfahren zur selektiven Entfernung von $NO_x$ aus Verbrennungsabgasen, die Arsenverbindungen als Verunreinigungen enthalten, durch selektive katalytische Reduktion mit Ammoniak.

Für die Entfernung von $NO_x$ aus Abgasen ist bisher eine Reihe von Verfahren bekannt geworden. Bekannt sind z.B. Verfahren, bei denen $NO_x$ mit einem Brennstoff, z.B. Erdgas oder Methan, in Gegenwart von Edelmetallen als Katalysatoren nichtselektiv zu Stickstoff reduziert wird. Diese Verfahren haben aber technisch keine Bedeutung erlangt, da neben den Stickoxiden auch der in den Abgasen vorhandene Sauerstoff umgesetzt wird, was neben dem Nachteil einer unerwünscht hohen Steigerung der Temperatur den weiteren Nachteil eines hohen Verbrauchs an Brennstoff hat, abgesehen davon, daß die Edelmetallkatalysatoren nicht vergiftungsfest sind.

Aus diesem Grunde ist auch ein selektiv arbeitendes katalytisches Verfahren entwickelt worden, bei dem die Stickoxide in Gegenwart von Nichtedelmetallkatalysatoren mit Ammoniak selektiv zu Stickstoff reduziert werden. Dieses unter dem Namen SCR-Verfahren (Selective Catalytic Reduction) bekannt gewordene Verfahren hat zunehmend an technischer Bedeutung gewonnen.

Bei diesem Verfahren wird praktisch der in den Abgasen enthaltende Sauerstoff nicht angegriffen und der Verbrauch an Ammoniak richtet sich allein nach dem Stickoxid-Gehalt der zu behandelnden Abgase.

Für dieses Verfahren werden verschiedene Katalysatoren eingesetzt.

In der JP-A-53-117689 wird ein Verfahren zur katalytischen Redektion von $NO_x$ aus Verbrennungsabgasen beschrieben, wobei der Katalysator aus Titanoxid, Wolframoxid, Vanadiumoxid und-sulfat sowie Zink- oder Zinnoxid besteht.

In der US-A-3 279 884 werden Katalysatoren beschrieben, die katalytisch wirksame Mengen an Vanadin-, Molybdän-, und/oder Wolframoxiden enthalten. In der DE-C-1 253 685 werden darüber hinaus auch Katalysatoren beschrieben, die auch Manganoxid und/oder Eisenoxid enthalten können.

In der DE-C-2 458 888 werden für den gleichen Zweck auch Katalysatoren genannt, die

1. Titan in Form von Oxiden und
2. wenigstens ein Element aus der Gruppe
    a) Eisen und Vanadin in Form von Oxiden und/oder Sulfaten und/oder
    b) Molybdän, Wolfram, Nickel, Cobalt, Kupfer, Chrom und Uran in Form von Oxiden sowie gegebenenfalls
3. Zinn in Form von Oxiden
4. Metalle aus der Gruppe Silber, Beryllium, Magnesium, Zink, Bor, Aluminium, Yttrium, Seltene Erdmetalle, Silicium, Niob, Antimon, Wismut und Mangan in Form von Oxiden

enthalten. Diese Katalysatoren können als Vollkatalysatoren oder auch auf übliche Träger aufgebracht eingesetzt werden. Die unter 4 genannten Komponenten sollen den Ausführungen der Patentschrift zufolge keinen nachteiligen Einfluß auf die Katalysatoreigenschaften ausüben, d.h. in anderen Worten, daß sie die katalytische Aktivität auch nicht steigern. Sie können aus diesem Grunde als Nebenkomponente oder Verunreinigung in den Ausgangsmaterialien für die Komponenten 1 bis 3 enthalten sein, ohne daß sie vorher entfernt werden müssen.

In der DE-A-3 438 367 werden Katalysatoren beschrieben, die

1. aus einer binären Oxidverbindung des Titans und Siliciums und/oder des Titans und Zirkoniums und/oder einer ternären Oxidverbindung des Titans, Zirkoniums und Siliciums sowie
2. 0 - 5 Gew.% eines Vanadinoxids und
3. 1 bis 15 Gew.% mindestens eines Oxides der Elemente Wolfram, Molybdän, Zinn und Cer

bestehen.

In der DE-B-24 14 333 werden ferner Katalysatoren für das SCR-Verfahren beschrieben, die aus einem Vanadinkatalysator der allgemeinen Formel $V_x A_y O_z$ bestehen. In dieser Formel steht A für die Elemente Kupfer, Zink, Zinn, Blei, Titan, Phosphor, Chrom, Eisen, Kobalt und Nickel, y und x bedeuten eine Zahl mit einem Wert von 0,5 bis 12 und der Wert für z richtet sich nach $V_x$ und $A_y$.

Von den aus dem oben zitierten Stand der Technik zu entnehmenden Katalysatorkomponenten haben sich bezüglich der Aktivität für die $NO_x$-Reduktion insbesondere Katalysatoren bewährt, die die Elemente Vanadium, Wolfram, Molybdän und Titan enthalten. Besonders Augenmerk wurde dabei auf die Entwicklung von Katalysatoren gelegt, die eine möglichst hohe Reduktion des $NO_x$ gewährleisten, andererseits aber möglichst inert gegenüber der Oxidation von $SO_2$ zu $SO_3$ sind. $SO_2$ kommt stets in den Verbrennungsgasen von schwefelhaltigen Ölen oder Kohlen vor. Aus der oben zitierten DE-A-34 38 367 ist es bekannt, daß ein Gehalt an Vanadiumoxid im Katalysator einerseits für die hohe Aktivität bezüglich der $NO_x$-Reduktion verantwortlich ist, andererseits aber auch eine unerwünschte Oxidation des $SO_2$ zu $SO_3$ begünstigt, was wiederum zu Störungen durch die Bildung von Ammoniumsulfaten führt, die sich in den der katalytischen Reaktionszone nachfolgenden Apparateteilen und Rohrleitungen niederschlagen.

Bei der Verbrennung von Kohle enthalten die Verbrennungsabgase neben den Verbrennungsprodukten sowie Stickoxiden und Schwefeldioxid auch weitere Verunreinigungen, insbesondere Verunreinigungen von Metallen, durch die die Katalysatoren geschädigt werden, was mit einer Erniedrigung ihrer Aktivität verbunden ist. Es hat sich gezeigt, daß insbesondere Arsenverbindungen für diese Katalysatorschädigungen verantwortlich sind. Verbrennungsabgase, die bei Feuerungen mit Schmelzascheabzug anfallen, haben einen höheren Arsengehalt als Abgase, die bei Feuerungen mit Trockenascheabzug anfallen. Auch in den Abgasen von Müllverbrennungsanlagen können wechselnde Mengen an Arsenverunreinigungen auftreten.

In der EP-A-02 60 614 werden Katalysatoren beschrieben, die bei dem SCR-Verfahren bei der Behandlung von Arsenverbindungen enthaltenen Abgasen eingesetzt werden und die eine erhöhte Vergiftungsfestigkeit gegenüber Arsen aufweisen sollen. Diese Katalysatoren enthalten Titan und Vanadium als wesentliche Komponenten, wobei das Gewichtsverhältnis von Titanoxiden zu Vanadiumoxiden von 99,9 : 0,1 bis 92,0 : 8,0 betragen soll. Ferner können sie auch noch Wolfram- und/oder Molybdänoxid enthalten. Das Vanadium soll an der Oberfläche bis zu einer Tiefe von 200 $\mu$m in der Weise angereichert sein, daß seine Konzentration in diesem Bereich mindestens das 1,5-fache der Vanadiumkonzentration in den übrigen Bereichen beträgt. Zur Erzielung dieses Vanadiumkonzentrations-Profils müssen bei der Herstellung des Katalysators besondere Bedingungen beachtet werden.

Auch in der EP-A-0 256 359 werden Katalysatoren angegeben, die gegenüber arsenhaltigen Abgasen eine erhöhte Vergiftungsfestigkeit aufweisen. Diese Katalysatoren sollen zwei Gruppen von Poren aufweisen, nämlich zum einen Poren mit einem Durchmesser von $1 \times 10^2$ Å bis weniger als $1 \times 10^3$ Å und zum anderen Poren mit einem Durchmesser von $1 \times 10^3$ Å bis $1,2 \times 10^5$ Å, wobei das Porenvolumen der ersten Gruppe mindestens 10 % des Gesamtporenvolumens ausmachen soll. Der Katalysator soll neben Titan mindestens ein weiteres Element, ausgewählt aus Molybdän, Vanadium, Wolfram, Mangan, Kobalt, Kupfer, Eisen, Chrom, Nickel, Zink und Zinn, enthalten. Um die großen Poren in dem fertigen Katalysator zu erhalten, werden bei der Herstellung Feststoffe möglichst homogen eingearbeitet, die bei der Calcination weggebrannt werden, was ebenfalls die Herstellung von Katalysatoren mit reproduzierbaren Eigenschaften erschwert.

Der vorliegenden Erfindung lag daher die Aufgabe zugrunde, ein Verfahren zur Entfernung von Stickoxiden aus Verbrennungsabgasen durch selektive katalytische Reduktion mit Ammoniak in Gegenwart eines Katalysators, der im wesentlichen Titanoxid sowie katalytisch wirksame Mengen an Verbindungen des Vanadiums, Molybdäns, Wolframs und Zinks enthält, bereitzustellen, bei dem ein Katalysator eingesetzt wird, der einfach herzustellen ist, eine hohe Aktivität und Selektivität bezüglich der $NO_x$-Abreinigung aufweist und der auch bei langen Standzeiten eine hohe Vergiftungsfestigkeit gegenüber Arsenverbindungen aufweist.

Es wurde gefunden, daß diese Aufgabe dadurch gelöst werden kann, daß der Katalysator

A) Titan in Form von Oxiden

B) Vanadium in Form von Oxiden oder Sulfaten

C) Molybdän und/oder Wolfram in Form von Oxiden und

D) Zink in Form von Oxiden oder Sulfaten enthält mit der Maßgabe, daß die Metallkomponenten A bis D in den Atomverhältnissen A zu B zu C zu D von 1 zu 0,0022 - 0,0165 zu 0,021 - 0,21 zu 0,009 - 0,028 vorliegen.

Von der Gruppe C ist Wolfram besonders bevorzugt. Bevorzugte Atomverhältnisse für Titan : Wolfram sind 1 zu 0,023 bis 0,1, besonders bevorzugt 0,023 bis 0,05.

Überraschenderweise gelingt es durch den Zinkgehalt des Katalysators in den oben angegebenen Grenzen, die Vergiftungsfestigkeit des Katalysators gegenüber Arsenverbindungen erheblich zu erhöhen. Hauptsächlich liegen die Zinkverbindungen als Zinkoxid vor, es kann aber auch in Form einer gegenüber den Arbeitstemperaturen des Katalysators stabilen Zinkverbindung, z.B. Zinksulfat vorliegen.

Die Titanoxide können als $TiO_2$ in der Rutil- oder vorzugsweise in der Anatasform, sie können aber auch als binäre Oxide z.B. als Oxidverbindung des Titans und Zirkons, oder Titans und Siliciums oder als ternäre Oxidverbindungen der genannten Elemente vorliegen.

Zur Herstellung der Katalysatoren gibt es verschiedene an sich bekannte Möglichkeiten:

Eine mögliche Ausführungsform besteht darin, daß man ein Gemenge aus Titanoxiden, Wolframoxiden und/oder Molybdänoxiden und einer Verbindung des Vanadins wie Ammoniumvanadat, Vanadinoxalat und Vanadinoxid innig vermischt und hierzu während des Mischprozesses eine wäßrige, alkoholische, etherische oder ammoniakalische Lösung einer Verbindung des Zinks zusetzt. Das plastifizierte Material kann zu verschiedensten geometrischen Formkörpern weiterverarbeitet werden. An die Formgebung schließt sich eine Trocknung bei 50°C - 150°C, insbesondere 60°C - 130°C und eine Calcination bei 350°C - 750°C, insbesondere 450°C - 650°C an.

Zink kann in Form handelsüblicher Produkte wie z.B. als Oxid, Nitrat, Sulfat, Oxalat, Wolframat, Molybdat, Stearat, Carbonat in die Katalysatormasse eingebracht werden.

Das für die erfindungsgemäßen Katalysatoren verwendete Titanoxid wird bevorzugt aus Metatitansäure hergestellt und das Wolframoxid bevorzugt aus Ammoniumparawolframat.

Es ist aber auch möglich, von homogenen Lösungen der Komponenten A, B, C, und D auszugehen, diese einzudampfen, zu trocknen und durch Calcinieren bei den oben genannten Temperaturen in die Oxide überzuführen. Aus den genannten Lösungen können aber auch die Komponenten durch Fällung ausgeschieden werden, wobei diese Fällungen durch Hydrolyse in die Oxide übergeführt werden.

Selbstverständlich können die Katalysatoren auch die für den vorliegenden Zweck bekannten Oxide wie diejenigen des Zinns, Nickels, Kobalts, Kupfers, Chroms, Urans, Cers und dgl. enthalten.

Die Katalysatoren können entweder aus den genannten Bestandteilen alleine oder auch auf einen an sich bekannten Träger aufgebracht sein z.B. Aluminiumoxid in der $\alpha$- oder $\gamma$-Form, Siliciumdioxid, Kieselsäure oder Silikate wie Mullit oder Cordierit.

Die Katalysatoren lassen sich in beliebiger Form einsetzen, z.B. als Strangpresslinge, Tabletten, vorzugsweise aber in Form von Wabenkörpern mit durchgehend parallel zueinander verlaufenden Kanälen.

Das Verfahren wird bei Temperaturen von 100 bis 600°C, vorzugsweise von 300 bis 450°C bei Raumgeschwindigkeiten von 1 000 bis 150 000 h$^{-1}$, insbesondere 2 000 bis 100 000 h$^{-1}$ durchgeführt. Das Ammoniak wird im molaren Verhältnis von $NH_3$:NO von 0,5 bis 1,4, vorzugsweise von 0,7 bis 1,1, besonders bevorzugt bei einem molaren Verhältnis < 1 durchgeführt, um einen $NH_3$-Schlupf zu vermeiden.

Durch die folgenden Beispiele wird das erfindungsgemäße Verfahren näher erläutert:

Beispiele

150 g $TiO(OH)_2$ wurden mit 3750 g konzentrierter $H_2SO_4$ innig vermischt, 2 h bei 200°C erhitzt und anschließend in 7,5 l $H_2O$ aufgelöst. Der Rückstand wird abfiltriert und das Filtrat mit 25 gew.%iger $NH_3$-Lösung versetzt bis die Fällung der Metatitansäure beendet ist. Man filtriert ab und wäscht gründlich mit destilliertem Wasser. Zu dem feuchten Produkt gibt man 136 g Ammonium-p-Wolframat in 2,0 l $H_2O$, heizt auf 90°C auf und läßt 1 h rühren. Danach wird das Produkt eingedampft. Das $TiO_2/WO_3$-Atom-Verhältnis des eingedampften Produktes betrug 1 : 0,036.

Zu 1200 g des eingedampften Produktes gibt man eine Lösung von $NH_4VO_3$ in Monoethanolamin/$H_2O$ und eine Lösung von $Zn(NO_3)_2 \cdot 6 H_2O$ in $H_2O$. Man mischt gründlich durch und gibt Bentonit als Verstrangungshilfsmittel zu. Die Mischung wird zu Strängen mit einem Durchmesser von 5 mm verarbeitet. Diese werden bei 110°C getrocknet und 6 h lang bei 600°C calciniert. Die Mengen des eingesetzten $NH_4VO_3$ und $Zn(NO_3)_2 \cdot 6H_2O$ können der folgenden Tabelle 1 entnommen werden.

BASF Aktiengesellschaft

Tabelle 1

| Katalysatoren | Atomverhältnisse | | | | Rohprodukt [g] | NH$_4$VO$_3$ [g] | Zn(NO$_3$)$_2$ · 6H$_2$O [g] |
|---|---|---|---|---|---|---|---|
| | Ti | W | V | Zn | | | |
| Beispiel 1 | 1 | 0.036 | 0.0022 | 0.0095 | 1200 | 29,3 | 48,7 |
| Vergleichsbeispiel 1 | 1 | 0.036 | 0.0022 | 0.0 | " | 28.9 | – |
| Beispiel 2 | 1 | 0.036 | 0.0049 | 0.017 | " | 65.0 | 86.5 |
| Beispiel 3 | 1 | 0.036 | 0.0047 | 0.026 | " | 65.0 | 133.6 |
| Vergleichsbeispiel 2 | 1 | 0.036 | 0.0049 | 0.0 | " | 65.0 | – |
| Beispiel 4 | 1 | 0.036 | 0.016 | 0.023 | " | 216.6 | 118,0 |
| Vergleichsbeispiel 3 | 1 | 0.036 | 0.029 | 0.0031 | " | 381.2 | 14.1 |
| Vergleichsbeispiel 4 | 1 | 0.036 | 0.036 | 0.041 | " | 476.5 | 212.2 |

Die gemäß den Beispielen 1 bis 4 und Vergleichsbeispielen 1 bis 4 erhalten Katalysatoren werden zwecks Testung ihrer Aktivität einmal mit einem Rauchgas mit folgender Zusammensetzung 1000 Vpm NO, 1000 Vpm NH$_3$, 1000 Vpm SO$_2$, 5 Vol.% SO$_2$, 10 % Wasserdampf, Rest Stickstoff bei einer Temperatur von 380°C und einer Raumgeschwindigkeit von 66 500 h$^{-1}$ beaufschlagt. Es werden jeweils 1,5 ml Katalysator, der auf Korngrößen von 0,5 bis 1 mm zerkleinert war, eingesetzt. Der Testreaktor hat einen Durchmesser von 6 mm. Zum anderen werden sie mit einem Rauchgas unter sonst gleichen Bedingungen beaufschlagt, das zusätzlich 1 Vpm As$_4$O$_6$ enthält und der NO-Umsatz nach 7 Stunden gemessen. Die Ergebnisse sind in Tabelle 2 zusammengestellt.

BASF Aktiengesellschaft

Tabelle 2

| Beispiel | Beispiel | Vergleichs-beispiel | Beispiel | Beispiel | Vergleichs-beispiel | Beispiel | Vergleichs-beispiel | Vergleichs-beispiel |
|---|---|---|---|---|---|---|---|---|
| | 1 | 1 | 2 | 3 | 2 | 4 | 3 | 4 |
| Temp. [°C] | 380 | 380 | 380 | 380 | 380 | 380 | 380 | 380 |
| SV [$h^{-1}$] | 66500 | 66500 | 66500 | 66500 | 66500 | 66500 | 66500 | 66500 |
| NO-Umsatz ohne $As_2O_3$ in % | 90 | 81 | 98 | 98 | 91 | 100 | 95 | 74 |
| NO-Umsatz mit $As_2O_3$, [%] nach 7 h | 79 | 64 | 91 | 92 | 73 | 96 | 71 | 45 |

Aus den in der Tabelle zusammengestellten Ergebnissen ist zu ersehen, daß die Katalysatoren gemäß Beispiel 1 und Vergleichsbeispiel 1 sich nur dadurch unterscheiden, daß der Katalysator des Vergleichbeispieles kein Zink enthält. Gemäß den Ergebnissen der Tabelle 2 fällt der NO-Umsatz bei dem Zn-freien Katalysator bei Beaufschlagung mit einem $As_4O_6$-haltigen Gas wesentlich stärker ab, als bei dem Zn-haltigen Katalysator des Beispiels 1. Analoge Ergebnisse zeigen sich bei einem Vergleich der Katalysatoren gemäß Beispielen 2 bis 3 mit dem Katalysator des Vergleichsbeispieles 2.

In den Vergleichsbeispielen 3 und 4 werden Katalysatoren veranschaulic, die sowohl bezüglich ihres Vanadium- als auch bezüglich ihres Zn-gehalt oberhalb der beanspruchten Bereiche liegen. Obwohl der Katalysator gemäß Vergleichsbeispiel 3 eine gute Aktivität bei $As_4O_6$-freien Gasen zeigt, fällt diese nach Beaufschlagung mit $As_4O_6$-haltigen Gasen stark ab. Der Katalysator gemäß Vergleichsbeispiel 4 zeigt dagegen schon bei $As_4O_6$-freien Gasen eine schlechte Anfangsaktivität.

**Patentansprüche**

1. Verfahren zur Entfernung von Stickoxiden aus Verbrennungsabgasen, die Arsenverbindungen als Verunreinigungen enthalten, durch selektive katalytische Reduktion mit Ammoniak in Gegenwart eines Katalysators, der im wesentlichen Titanoxid sowie katalytisch wirksame Mengen an Verbindungen des Vanadiums sowie des Molybdäns und/oder Wolframs enthält, dadurch gekennzeichnet, daß der Katalysator
   A) Titan in Form von Oxiden
   B) Vanadin in Form von Oxiden oder Sulfaten
   C) Molybdän und/oder Wolfram in Form von Oxiden und
   D) Zusätzlich Zink in Form von Oxiden oder Sulfaten enthält mit der Maßgabe, daß die Metallkomponenten A bis D in den Atomverhältnissen A zu B zu C zu D von 1 zu 0,0022 - 0,0165 zu 0,021 - 0,21 zu 0,009 - 0,028 vorliegen.

2. Verfahren nach Anspruch 1, dadurch gekennzeichnet, daß das Oxid Wolframoxid ist, mit der Maßgabe, daß das Atomverhältnis der Metallkomponenten A : C von 1 : 0,023 bis 0,1 beträgt.

3. Verfahren nach Anspruch 2, dadurch gekennzeichnet, daß das Atomverhältnis der Metallkomponenten A : C 0,023 bis 0,05 beträgt.

**Claims**

1. A process for the removal of nitrogen oxides from combustion off gases which contain arsenic compounds as impurities, by selective catalytic reduction using ammonia in the presence of a catalyst essentially containing titanium oxide and catalytically effective amounts of compounds of vanadium and of molybdenum and/or tungsten, wherein the catalyst contains
   A) titanium in the form of oxides
   B) vanadium in the form of oxides or sulfates
   C) molybdenum and/or tungsten in the form of oxides and
   D) in addition, zinc in the form of oxides or sulfates, with the proviso that the metal components A to D are present in an A:B:C:D atomic ratio of from 1:0.0022-0.0165:0.021-0.21:0.009-0.028.

2. A process as claimed in claim 1, wherein the oxide is tungsten oxide, with the proviso that the atomic ratio between the metal components A and C is from 1:0.023 to 0.1.

3. A process as claimed in claim 2, wherein the atomic ratio between the metal components A and C is from 0.023 to 0.05.

**Revendications**

1. Procédé pour l'élimination d'oxydes d'azote de gaz de combustion résiduaires, qui contiennent des composés de l'arsenic à titre d'impuretés, par réduction catalytique et sélective avec de l'ammoniac, en présence d'un catalyseur, qui contient essentiellement de l'oxyde de titane, comme aussi des proportions catalytiquement actives de composés du vanadium, comme aussi du molybdène et/ou du tungstène, caractérisé en ce que le catalyseur contient
   A) du titane sous forme d'oxydes,
   B) du vanadium sous forme d'oxydes ou de sulfates,
   C) du molybdène et/ou du tungstène sous forme d'oxydes et
   D) complémentairement du zinc sous forme d'oxydes ou de sulfates,
   avec les conditions que les composants métalliques A à D soient présents dans les rapports atomiques A à B à C à D de 1 à 0,0022 - 0,0165 à 0,021 - 0,21 à 0,009 - 0,028.

7

2. Procédé suivant la revendication 1, caractérisé en ce que l'oxyde est de l'oxyde de tungstène, avec la condition que le rapport atomique des composants métalliques A:C varie de 1:0,023 à 0,1.

3. Procédé suivant la revendication 2, caractérisé en ce que le rapport atomique des composants métalliques A:C est de 0,023 à 0,05.